# EUROPÄISCHE PATENTSCHRIFT

(11) **EP 2 372 299 B1**
(45) Veröffentlichungstag und Bekanntmachung des Hinweises auf die Patenterteilung: **01.04.2015**
(21) Anmeldenummer: 11001966.8
(22) Anmeldetag: 10.03.2011
(51) Int. Cl.: F42B 39/14, F02K 9/38

(54) **Vorrichtung zum Abbrennen von Treibstoffen oder Explosivstoffen**
Device for burning off propellants or explosive substances
Dispositif de combustion de propergols ou de matières explosives

(30) Priorität: 30.03.2010 DE 102010013425
(43) Veröffentlichungstag der Anmeldung: 05.10.2011
(73) Patentinhaber: Bayern-Chemie Gesellschaft für flugchemische Antriebe mbH, 84544 Aschau a. Inn (DE)
(72) Erfinder: Bauer, Karl, 83564 Soyen (DE); Hacker, Andreas, 83536 Gars (DE); Friedemann, Detlev, 84559 Kraiburg (DE); Rilnäcker, Claudia, 84478 Waldkraiburg (DE); Weigand, Hans, 83308 Trostberg (DE)
(74) Vertreter: vP-IP von Puttkamer Berngruber Loth Spuhler

(56) Entgegenhaltungen:
- EP-A2- 2 128 559
- US-A- 5 466 537
- US-A- 5 959 235

## Beschreibung

Die Erfindung bezieht sich auf eine Vorrichtung zum Abbrennen von Treibstoffen oder Explosivstoffen nach dem Oberbegriff des Anspruchs 1.

Vor allem Festtreibstoffe für Raketen haben oft die Eigenschaft, dass sie bei höherer Temperatur schneller abbrennen und unter Umständen sogar detonieren. Wird der Treibstoff durch einen Unglücksfall, beispielsweise bei einem Brand auf einem Flugzeugträger langsam von außen bis zur Selbstentzündungstemperatur erhitzt, kann es vorkommen, dass der gesamte Treibstoff sich schlagartig entzündet und wie ein Detonationsstoff detoniert, mit oft verheerenden Auswirkungen auf Mensch und Umgebung. Um ein solches Unglück zu vermeiden, nimmt man, bevor die Detonation auftritt, lieber einen gezielten Abbrand des Treibstoffs in Kauf.

Um einen Abbrand des Raketenmotors unterhalb der Selbstentzündungstemperatur des Treibstoffs herbeizuführen, ist es bekannt, in Raketenmotoren Frühzündeinrichtungen vorzusehen, die den Treibstoff bei einer definierten Auslösetemperatur entzünden, sich unterhalb der Auslösetemperatur jedoch passiv, also ohne jeglicher Gefahr einer ungewollten Entzündung verhalten.

Aus US 5,959,235 A ist eine Vorrichtung zum Abbrennen eines Treibstoff- oder Explosivstoffs nach dem Oberbegriff des Anspruchs 1 bereits bekannt.

Dabei ist die eine Substanz in die andere Substanz eingebettet, mit der sie exotherm reagiert. Die Reaktion der beiden Substanzen erfolgt, wenn wenigstens eine geschmolzen ist und sich mit der anderen vermischt, um exotherm zu reagieren. D. h. der Schmelzpunkt der wenigstens einen Substanz bestimmt die Auslösetemperatur und damit zugleich das Ausmaß der exothermen Reaktion. Es gibt jedoch nur wenige Substanzen, die diese Voraussetzungen erfüllen. Dies gilt erst recht, wenn beide Substanzen erst im geschmolzenen Zustand im erforderlichen Ausmaß exotherm reagieren.

Es ist Aufgabe der vorliegenden Erfindung, eine Vorrichtung zum Abbrennen von Treibstoff oder Explosivstoffen anzugeben, die zuverlässig bei einer bestimmten Temperatur den Treibstoff gezielt entzündet, unterhalb dieser Temperatur jedoch keinerlei Reaktion hervorruft und für eine Vielzahl von Zündtemperaturen geeignet ist.

Die Aufgabe wird durch eine Vorrichtung nach Patentanspruch 1 gelöst. Vorteilhafte Ausgestaltungen der Vorrichtung sind Gegenstand von Unteransprüchen.

Nach der Erfindung wird eine Vorrichtung zum Abbrennen von Treibstoffen und Explosivstoffen mit einer Auslösetemperatur angegeben, die unterhalb der Selbstentzündungstemperatur des Treibstoffes und Explosivstoffes liegt. Die erfindungsgemäße Vorrichtung weist mindestens zwei miteinander exotherm reagierende Substanzen auf. Mindestens eine erste Substanz liegt unterhalb der Auslösetemperatur der Vorrichtung in einem flüssigen Aggregatszustand vor. Die erste Substanz ist von mindestens einer zweiten Substanz durch mindestens eine druckdichte Barriere getrennt. Die zweite Substanz kann bei der Auslösetemperatur im festen Aggregatszustand vorliegen. Sie weist dann vorzugsweise eine große Oberfläche auf und kann dann z.B. pulverförmig sein.

Die erste Substanz liegt vorzugsweise bei Raumtemperatur, insbesondere auch noch bei der maximal zulässigen Lager- und Betriebstemperatur der Rakete, also des Treibstoffs, oder der maximal zulässigen Lager- und Betriebstemperatur des Explosivstoffs, vorzugsweise in fester Form vor, um zu verhindern, dass sie bei dieser Temperatur beispielsweise durch Undichtigkeiten der Barriere mit der zweiten Substanz reagiert.

Das heißt, der Schmelzpunkt der ersten Substanz kann auch nur wenige Grad Celsius, also beispielsweise lediglich 10°C oder weniger unter der Auslösetemperatur liegen.

Beispielsweise ist der Feststofftreibsatz eines Raketenmotors so ausgelegt, dass er annähernd kontinuierlich abbrennt, wenn sich die Masse des Treibsatzes auf einer verhältnismäßig niedrigen Temperatur befindet. Wenn ein Feststoffraketenmotor dagegen beispielsweise durch einen Brand auf die Selbstentzündungstemperatur von beispielsweise 160° oder mehr erwärmt wird, kann eine Deflagration ggf. auch Explosion auftreten.

Die Auslösetemperatur, also die Temperatur, bei der die erfindungsgemäße Vorrichtung ausgelöst wird, soll möglichst weit von der maximal zulässigen Lager- und Betriebstemperatur des Treibstoffs bzw. Explosivstoffs von beispielsweise +70°C, aber auch möglichst weit von der Selbstentzündungstemperatur des Treibstoffs bzw. Explosivstoffs entfernt liegen. Bei Raketentreibstoffen liegt die gewünschte Auslösetemperatur dabei bei mindestens 90°C, insbesondere mindestens 100°C und höchstens 150°C, insbesondere höchstens 130°C. Um so mehr man mit der Auslösetemperatur an die Selbstentzündungstemperatur kommt, um so heftiger kann eine mögliche, explosive Reaktion ausfallen.

Damit wird sichergestellt, dass der Treibstoff oder Explosivstoff unterhalb der Selbstentzündungstemperatur des Treibstoffes gezielt und kontrolliert abgebrannt wird.

Durch eine exotherme Reaktion zweier Substanzen, die an einer bestimmten Position des Brennraums der Rakete, z.B. der Stirnseite, also gegenüber der Düse der Rakete, angeordnet sind, kann der in der Rakete befindliche Treibstoff gezielt bei einer bestimmten Temperatur entzündet werden. Die Auslösetemperatur liegt also vorzugsweise unterhalb der Selbstentzündungstemperatur des Treibstoffs oder Explosivstoffs, bei der sich diese für gewöhnlich passiv verhalten und die Gefahr einer ungewollten Entzündung nicht vorliegt.

In einer Ausführungsform der Vorrichtung umfasst die druckdichte Barriere wenigstens ein Material, dessen Schmelztemperatur wenigstens gleich der Auslösetemperatur der Vorrichtung ist. Bei der Auslösetemperatur der Vorrichtung schmilzt das Material der Barriere, wodurch die Flüssigkeit der ersten Substanz zu der zweiten Substanz strömt, sich mit der zweiten Substanz vermischt und es zu einer exothermen Reaktion kommt, bei der Wärme, heiße Partikel und/oder eine heiße Gasströmung zur Entzündung des Treibstoffs bzw. Explosivstoffs entsteht.

In einer Ausführungsform der Vorrichtung weist die druckdichte Barriere mindestens eine Durchströmöffnung auf. Die Durchströmöffnung ist beispielsweise als ein zu beiden Seiten der Barriere offener Kanal ausgebildet, der mit einem schmelzbaren Material verschlossenen ist. Das schmelzbare Material weist vorzugsweise eine Schmelztemperatur auf, die gleich der Auslösetemperatur der Vorrichtung ist. Beim Erreichen der Auslösetemperatur schmilzt das Material, sodass die erste Substanz durch die Durchströmöffnung in Kontakt mit der zweiten Substanz kommt, sich mit dieser vermischt und es zu einer exothermen Reaktion der beiden Substanzen kommt. Bei der exothermen Reaktion der beiden Substanzen wird Wärme freigesetzt und/oder heiße Partikel und/oder eine heiße Gasströmung, die aus der Vorrichtung entweichen und damit den Treibstoff bzw. Explosivstoff entzünden.

In einer Ausführungsform der Vorrichtung ist die druckdichte Barriere durch wenigstens eine Membran gebildet, die eine Durchstoßeinrichtung umfasst. Durch die Durchstoßvorrichtung wird die Membran beim Verschieben der Membran mit Hilfe der Durchstoßvorrichtung durchstoßen, wodurch die erste Substanz, die bei der Auslösetemperatur im flüssigen Aggregatszustand vorliegt, in Kontakt mit der zweiten Substanz kommt, sich mit dieser vermischt und es zu einer exothermen Reaktion kommt, bei der Wärme, heiße Partikel und/oder eine heiße Gasströmung freigesetzt werden.

In einer weiteren Ausführungsform der Vorrichtung ist die druckdichte Barriere durch eine Abdichtung gebildet. Die Abdichtung weist wenigstens eine Durchströmöffnung auf, die bis zur Auslösetemperatur der Vorrichtung durch jeweils einen Kolben verschlossen ist. Die Abdichtung ist vorzugsweise beweglich ausgebildet und trennt die erste Substanz unterhalb der Auslösetemperatur von der zweiten Substanz. Der oder die Kolben sind in einer Ausführungsform fest mit der Vorrichtung verbunden und verschließen unterhalb der Auslösetemperatur der Vorrichtung die Durchströmöffnung der Abdichtung. Erhöht sich der Innendruck im Bereich der ersten Substanz, wird die

Abdichtung verschoben, so dass der Kolben die Durchströmöffnung der Abdichtung freigibt und die erste Substanz in Kontakt mit der zweiten Substanz kommt. Dabei kann der Kolben durch einen Lotkörper an einer Verschiebung gehindert werden, sodass das nach Schmelzen des Lotkörpers bei der Auslösetemperatur eine Verschiebung des Kolbens ermöglicht wird.

In einer weiteren Ausführungsform der Vorrichtung weist diese mehrere druckdichte Barrieren auf, die in einer oder mehrerer der zuvor beschriebenen Ausführungsformen der Barriere ausgebildet sind.

In einer Ausführungsform weist die Vorrichtung mehrere druckdichte Barrieren auf, bei der wenigstens eine erste Barriere ein Material umfasst, dessen Schmelztemperatur wenigstens gleich der Auslösetemperatur der Vorrichtung ist, sowie wenigstens eine zweite Barriere, die durch eine Membran gebildet ist, die eine Durchstoßvorrichtung umfasst, bei der wenigstens eine dritte Barriere eine Abdichtung mit einer Durchströmöffnung aufweist, die unterhalb der Auslösetemperatur der Vorrichtung mit einem Kolben verschlossen ist und/oder bei der wenigstens eine weitere Barriere mindestens eine durchgehende Öffnung aufweist, die mit einem Material verschlossen ist, das eine Schmelztemperatur aufweist, die gleich der Auslösetemperatur der Vorrichtung ist.

Die druckdichten Barrieren können in verschiedenen Ausführungsformen und in beliebiger Reihenfolge miteinander kombiniert werden. Durch die Kombination mehrerer, nach unterschiedlichen Prinzipien arbeitenden, druckdichter Barrieren weist die Vorrichtung eine hohe Sicherheit gegenüber einer ungewollten Auslösung der Vorrichtung auf. Auch bei

Kombination von mehreren Barrieren ist eine Auslösung bei Erreichen der Auslösetemperatur gesichert, so dass die Treibstoffe oder Explosivstoffe kontrolliert abbrennen können.

In einer Ausführungsform der Vorrichtung weist mindestens eine erste Substanz unterhalb der Auslösetemperatur der Vorrichtung einen höheren Druck auf als mindestens eine zweite Substanz.

Durch die unter erhöhtem Druck stehende erste Substanz kann diese bei einem Wegfall der Barriere bzw. bei einem Öffnen der Barriere in Kontakt mit der zweiten Substanz kommen und sich mit der zweiten Substanz vermischen, wobei es zu einer exothermen Reaktion kommt, bei der Wärme, heiße Partikel und/oder eine heiße Gasströmung entsteht.

In einer Ausführungsform ist die Vorrichtung in einem Brennraum einer Rakete, insbesondere einer Feststoffrakete angeordnet.

In einer Ausführungsform der Vorrichtung ist in einem Brennraum der Rakete der Treibstoff oder Explosivstoff derart angeordnet, dass sich der Treibstoff durch die exotherme Reaktion der wenigstens zwei Substanzen in der Vorrichtung unterhalb der Selbstentzündungstemperatur entzündet.

In einer Ausführungsform weist die Vorrichtung eine Öffnung auf, die mit einem Verschluss versehen ist. Der Verschluss umfasst vorzugsweise ein Material, das bei der Auslösetemperatur der Vorrichtung schmilzt. Durch das Schmelzen des Verschlusses wird die Öffnung freigegeben und heiße Partikel der im Inneren der Vorrichtung befindlichen Substanzen können aus der Vorrichtung austreten. Durch die austretenden heißen Partikel werden die in dem Brennraum der Rakete vorliegenden Treibstoffe oder Explosivstoffe entzündet. Es ist möglich, die zuvor beschriebene Vorrichtung auch bei weiteren pyrotechnischen Komponenten einzusetzen, bei denen eine frühzeitige gezielte Entzündung bei äußerer langsamer Erwärmung erwünscht ist.

Die oben beschriebene Vorrichtung wird anhand beigefügter Zeichnungen beispielhaft näher erläutert.

Darin zeigen, jeweils schematisch
- Figur 1: einen Schnitt durch eine Ausführungsform der Vorrichtung;
- Figur 2: einen Schnitt durch einen Raketenmotor;
- Figuren 3 und 4: einen Schnitt durch weitere Ausführungsformen der Vorrichtung.

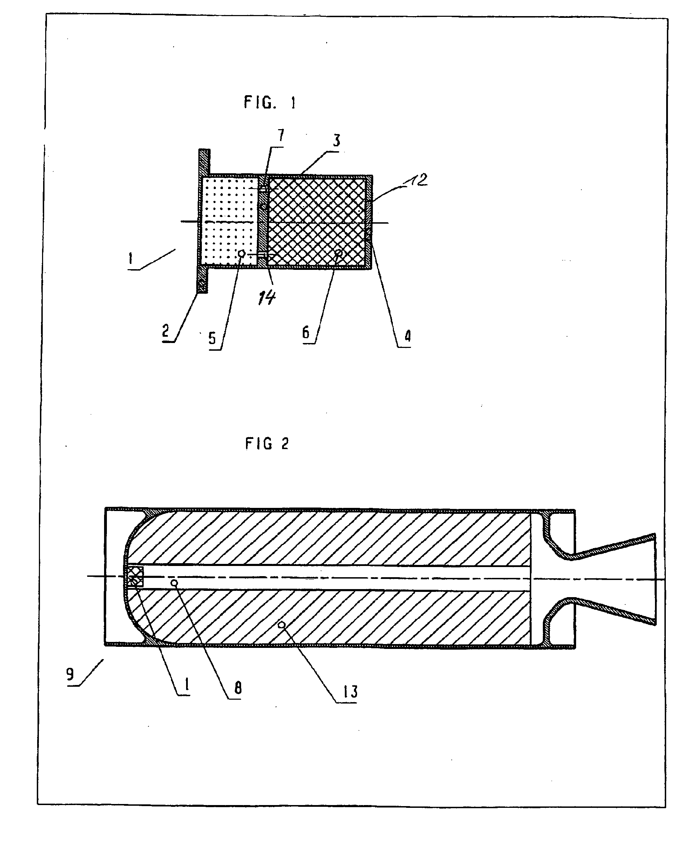

In Figur 1 ist schematisch ein Schnitt durch eine Vorrichtung 1 dargestellt, bei der das Gehäuse 2 der Vorrichtung 1 mittels einer Trennwand 3 in zwei voneinander getrennte Kammern aufgeteilt ist. In der linken Kammer befindet sich eine erste Substanz 5, in der rechten Kammer eine zweite Substanz 6. Die erste Substanz 5 liegt unterhalb der Auslösetemperatur als Flüssigkeit vor.

Die exotherme Reaktion der ersten Substanz mit der zweiten Substanz kann beispielsweise eine Oxidationsreaktion, eine Neutralisation oder eine Hydratation sein. So kann beispielsweise ein Reduktionsmittel, beispielsweise ein unterhalb der Auslösetemperatur schmelzender Zucker, Glyzerin oder dergleichen mit einem Oxidationsmittel, wie einem Alkalipermanganat erfolgen. Ferner kann beispielsweise eine Säure, wie Salzsäure oder ein Gemisch aus einer Säure mit einer anderen Substanz, welches unterhalb der Auslösetemperatur flüssig ist, mit einer Base, beispielsweise einem Alkalihydroxyd, wie Natriumhydroxyd, reagieren, also eine exotherme Neutralisationsreaktion erfolgen. Auch ist es möglich, beispielsweise Wasser oder ein wässriges Gemisch z. B. mit einem Alkali- oder Erdalkalimetalloxid, wie Kalziumoxid umzusetzen, also eine exotherme Hydratationsreaktion durchzuführen.

Dabei enthält vorzugsweise die erste Substanz 5 ein Treibmittel, beispielsweise Wasser, das unterhalb der Auslösetemperatur als Wasserdampf vorliegt, um die erste Substanz 5 durch Druckerhöhung durch die Durchströmöffnungen 14 in die Kammer mit der zweiten Substanz 6 zu befördern.

Die Trennwand 3 weist in der dargestellten Ausführungsform der Vorrichtung 1 zwei Durchströmöffnungen 14 auf, die durch druckdichte Barrieren 7 verschlossen sind. Die druckdichten Barrieren 7 sind vorzugsweise aus einem Material hergestellt, das bei der Auslösetemperatur der Vorrichtung 1 schmilzt und die Durchströmöffnungen 14 freigibt. Die druckdichte Barriere 7 kann dabei aus einem niedrig schmelzenden Lot bestehen, beispielsweise einem Wismut- und/oder Blei-haltigem Lot.

Nach dem Schmelzen der druckdichten Barriere 7 können sich die erste Substanz 5 und die zweite Substanz 6 miteinander vermischen. Da die erste Substanz 5 als Flüssigkeit vorliegt, treten die erste Substanz 5 und die zweite Substanz 6 sofort in Kontakt. Die erste Substanz 5 und die zweite Substanz 6 reagieren bei Kontakt exotherm miteinander, wobei es zu einer Wärmeabgabe kommt, die die Vorrichtung 1 erwärmt.

In der dargestellten Ausführungsform weist die Vorrichtung 1 eine Austrittsöffnung 12 im Bereich der Außenwand der rechten Kammer auf, die im Grundzustand mit einem Verschluss 4 verschlossen ist. Der Verschluss 4 besteht aus einem Material, das bei der Auslösetemperatur der Vorrichtung 1 schmilzt. Dabei kann es sich um ein niedrig schmelzendes, beispielsweise Wismut- und/oder Blei-haltiges Lot handeln. Bei der Reaktion der ersten 5 und der zweiten 6 Substanz kommt es zu einer Druckerhöhung im Inneren der Vorrichtung 1, wodurch heiße Partikel und/oder Gase der ersten 5 und der zweiten 6 Substanz und/oder Reaktionsprodukte dieser Substanzen durch die bei der Auslösetemperatur offene Austrittsöffnung 4 aus der Vorrichtung 1 austreten können.

In Figur 2 ist schematisch ein Schnitt durch einen Raketenmotor 9 dargestellt. Im Brennraum 8 des Raketenmotors 9 ist im Stirnbereich des Brennraums 8 eine Vorrichtung 1 angeordnet, wie sie beispielsweise in den Figuren 1, 3 und 4 dargestellt ist.

Die Vorrichtung 1 ist in unmittelbarer Nähe des in dem Brennraum 8 des Raketenmotors 9 angeordneten Treibstoffes 13 positioniert. Durch die exotherme Reaktion im Inneren der Vorrichtung 1 wird der in dem Brennraum 8 des Raketenmotors 9 angeordnete Treibstoff 13 unterhalb der Selbstentzündungstemperatur des Treibstoffes 12 gezielt entzündet, sodass dieser kontrolliert abbrennen kann ohne dass es zu einer ungewollten detonationsartigen schnellen Verbrennung des Treibstoffes 13 bei Erwärmung des Raketenmotors 9 von außen kommen kann. Der in dem Brennraum 8 des Raketenmotors 9 vorliegende Treibstoff 13 kann beispielsweise durch aus der Vorrichtung 1 austretende heiße Partikel oder Gase der in der Vorrichtung 1 exotherm reagierenden Substanzen entzündet werden. Alternativ wird der Treibstoff 13 durch das heiße Gehäuse 2 der Vorrichtung 1 entzündet.

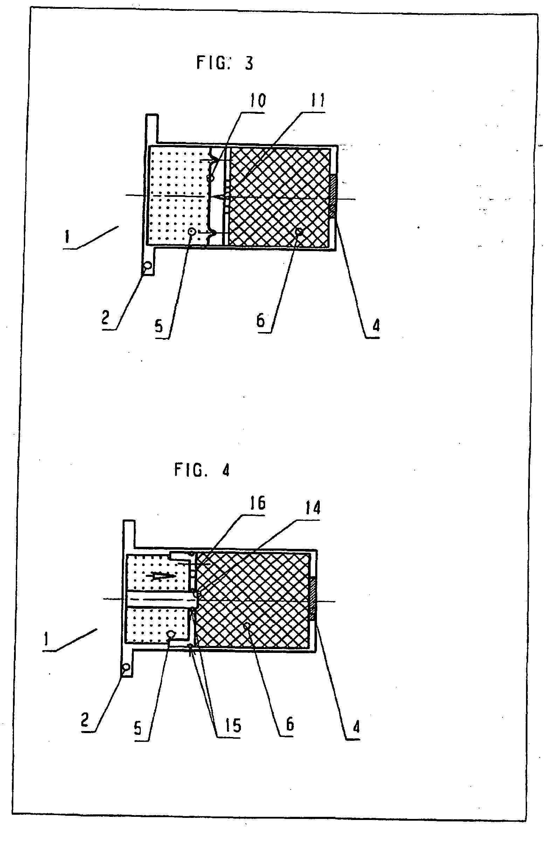

Figur 3 zeigt schematisch eine weitere Ausführungsform der Vorrichtung 1, bei der die druckdichte Barriere durch eine Membran 10 gebildet ist, die die erste Substanz 5 von der zweiten Substanz 6 trennt. Bei Erreichen der Auslösetemperatur der Vorrichtung 1, hat sich die erste Substanz 5 soweit ausgedehnt, dass die Membran 10 in Kontakt mit einer Durchstoßvorrichtung 11 kommt, wobei die Membran 10 wenigstens teilweise durchstoßen wird. Nach dem Durchstoßen der Membran 10 kommt die im flüssigen Aggregatszustand vorliegende erste Substanz 5 in Kontakt mit der zweiten Substanz 6. Die erste 5 und die zweite 6 Substanz reagieren exotherm miteinander, wobei es zu einer Wärmeentwicklung kommt.

In Figur 4 ist eine weitere Ausführungsform der Vorrichtung 1 dargestellt, bei der die druckdichte Barriere durch einen Kolben 16 und eine Abdichtung 15 gebildet sind. Die Abdichtung 15 trennt die erste Substanz 5 von der zweiten Substanz 6. Die Durchströmöffnung 14 der Abdichtung 15 ist im Grundzustand durch einen Kolben 16 verschlossen. Bei Erreichen der Auslösetemperatur der Vorrichtung 1 hat sich die erste Substanz 5 soweit ausgedehnt, dass die Abdichtung 15 in Richtung der zweiten Substanz 6 verschoben ist, wobei die Durchströmöffnung 14 ab einem gewissen Ausdehnungsvolumen der ersten Substanz 5 geöffnet wird. Die erste Substanz 5 kommt in Kontakt mit der zweiten Substanz 6, wobei eine exotherme Reaktion stattfindet, bei der Wärme, heiße Partikel und/oder eine heiße Gasströmung frei werden.

Obwohl in der Ausführungsbeispielen nur eine beschränkte Anzahl möglicher Weiterbildungen der Vorrichtung beschrieben werden konnte, ist die Erfindung nicht auf diese beschränkt. Es ist prinzipiell möglich, dass beispielsweise mehrere in den Figuren 1, 3 und 4 dargestellte druckdichte Barrieren miteinander kombiniert werden können und in beliebiger Reihenfolge hintereinander für eine sichere Trennung der ersten und zweiten Substanz voneinander innerhalb der Vorrichtung sorgen.

### Bezugszeichenliste

- 1: Vorrichtung
- 2: Gehäuse der Vorrichtung 1
- 3: Trennwand
- 4: Verschluss
- 5: erste Substanz
- 6: zweite Substanz
- 7: Barriere
- 8: Brennraum
- 9: Raketenmotor
- 10: Membran
- 11: Durchstoßvorrichtung
- 12: Austrittsöffnung
- 13: Treibstoff
- 14: Durchströmöffnung
- 15: Abdichtung
- 16: Kolben

## Patentansprüche

1. Vorrichtung (1) zum Abbrennen von Treibstoffen (13) oder Explosivstoffen mit einer Auslösetemperatur, die unterhalb der Selbstentzündungstemperatur des Treibstoffes (13) oder Explosivstoffes liegt, die mindestens zwei miteinander exotherm reagierende Substanzen (5, 6) aufweist, **dadurch gekennzeichnet, dass** mindestens eine erste Substanz (5) unterhalb der Auslösetemperatur der Einrichtung in einem flüssigen Aggregatszustand vorliegt und von mindestens einer zweiten Substanz (6) durch mindestens eine druckdichte Barriere (7) getrennt ist, wobei die druckdichte Barriere (7) bei Erreichen der Auslösetemperatur einen Kontakt zwischen der ersten Substanz (5) und der zweiten Substanz (16) zulässt.

2. Vorrichtung nach Anspruch 1, **dadurch gekennzeichnet, dass** die druckdichte Barriere (7) wenigstens ein Material umfasst, dessen Schmelztemperatur wenigstens gleich der Auslösetemperatur der Vorrichtung (1) ist.

3. Vorrichtung nach Anspruch 1, **dadurch gekennzeichnet, dass** die druckdichte Barriere (7) mindestens eine Durchströmöffnung (14) aufweist, die.mit einem Material verschlossen ist, das eine Schmelztemperatur aufweist, die gleich der Auslösetemperatur der Vorrichtung (1) ist.

4. Vorrichtung nach Anspruch 1, **dadurch gekennzeichnet, dass** die druckdichte Barriere (7) durch wenigstens eine Membran (10) gebildet ist, die eine Durchstoßeinrichtung (11) umfasst.

5. Vorrichtung nach Anspruch 1, **dadurch gekennzeichnet, dass** die druckdichte Barriere (7) durch eine Abdichtung (15) gebildet ist, die wenigstens eine Durchströmöffnung (14) aufweist, wobei die Durchströmöffnung (14) bis zur Auslösetemperatur der Vorrichtung (1) durch einen Kolben (16) verschlossen ist.

6. Vorrichtung nach einem der Ansprüche 2 bis 5, **dadurch gekennzeichnet, dass** diese mehrere druckdichte Barrieren (7) aufweist.

7. Vorrichtung nach einem der vorhergehenden Ansprüche, **dadurch gekennzeichnet, dass** mindestens eine erste Substanz (5), unterhalb der Auslösetemperatur der Vorrichtung (1) unter einem höheren Druck steht, als die mindestens eine zweite Substanz (6).

8. Verwendung der Vorrichtung nach einem der vorhergehenden Ansprüche im Brennraum (8) einer Feststoffrakete.

9. Verwendung nach Anspruch 8, **dadurch gekennzeichnet, dass** der in dem Brennraum (8) vorliegende Treibstoff (13) derart angeordnet ist, dass sich der Treibstoff (13) durch die exotherme Reaktion der wenigstens zwei Substanzen (5, 6) in der Vorrichtung (1) entzündet.

10. Verwendung nach Anspruch 9, **dadurch gekennzeichnet, dass** die Vorrichtung (1) eine Austrittsöffnung (12) aufweist, die mit einem Verschluss (4) versehen ist, der ein Material umfasst, das bei der Auslösetemperatur der Vorrichtung (1) schmilzt.

11. Verwendung nach Anspruch 10, **dadurch gekennzeichnet, dass** der in dem Brennraum (8) vorliegende Treibstoff (13) durch aus der Austrittsöffnung (12) austretende heiße Partikel und/oder eine aus der Austrittsöffnung (12) austretende heiße Gasströmung entzündbar ist.

## Claims

1. Device (1) for burning off propellants (13) or explosive substances at a trigger temperature below the spontaneous ignition temperature of the propellant (13) or the explosive substance which has at least two substances (5, 6) exothermically reacting with each other, **characterized in that** at least one first substance (5) is present in a liquid state of aggregation below the trigger temperature of the device and separated from at least one second substance (6) by at least one pressure-tight barrier (7), wherein, upon reaching the trigger temperature, the pressure-tight barrier (7) permits contact between the first substance (5) and the second substance (6).

2. Device according to claim 1, **characterized in that** the pressure-tight barrier (7) comprises at least one material the melting temperature of which is at least equal to the trigger temperature of the device (1).

3. Device according to claim 1, **characterized in that** the pressure-tight barrier (7) has at least one flow-through opening (14) which is closed with material having a melting temperature which is equal to the trigger temperature of the device (1).

4. Device according to claim 1, **characterized in that** the pressure-tight barrier (7) is formed by at least one membrane (10) comprising a puncture device (11).

5. Device according to claim 1, **characterized in that** the pressure-tight barrier (7) is formed by a seal (15) which has at least one flow-through opening (14), wherein the flow-through opening (14) is closed by means of a piston (16) until the trigger temperature of the device (1) is reached.

6. Device according to any of claims 2 to 5, **characterized in that** the device has a plurality of pressure-tight barriers (7).

7. Device according any of the preceding claims, **characterized in that** at least one first substance (5), when below the trigger temperature of the device (1), is under higher pressure than the at least one second substance (6).

8. Use of the device according to any of the preceding claims in the combustion chamber (8) of a solid propellant rocket.

9. Use according to claim 8, **characterized in that** the propellant (13) which is present in the combustion chamber (8) is arranged in such a way that the propellant (13) ignites in the device (1) due to the exothermic reaction of the at least two substances (5, 6).

10. Use according to claim 9, **characterized in that** the device (1) has an outlet opening (12) which is provided with a plug (4) comprising a material which melts at the trigger temperature of the device (1).

11. Use according to claim 10, **characterized in that** the propellant (13) which is present in the combustion chamber (8) can be ignited through hot particles escaping from the outlet opening (12) and/or a stream of hot gas escaping from the outlet opening (12).

## Revendications

1. Dispositif de combustion de propergols (13) ou de matières explosives avec une température de déclenchement qui est inférieure à la température d'auto-inflammation du propergol (13) ou de la matière explosive, qui présente au moins deux substances (5, 6) réagissant ensemble de manière exothermique, **caractérisé en ce qu'**au moins une première substance (5) est présente au-dessous de la température de déclenchement du dispositif dans un état d'agrégat liquide et est séparée d'au moins une deuxième substance (6) par au moins une barrière (7) étanche à la pression, la barrière (7) étanche à la pression permettant, lorsque la température de déclenchement est atteinte, un contact entre la première substance (5) et la deuxième substance (16).

2. Dispositif selon la revendication 1, **caractérisé en ce que** la barrière (7) étanche à la pression comprend au moins un matériau dont la température de fusion est au moins égale à la température de déclenchement du dispositif (1).

3. Dispositif selon la revendication 1, **caractérisé en ce que** la barrière (7) étanche à la pression présente au moins un orifice d'écoulement (14) qui est fermé par un matériau qui présente une température de fusion qui est égale à la température de déclenchement du dispositif (1).

4. Dispositif selon la revendication 1, **caractérisé en ce que** la barrière (7) étanche à la pression est formée par au moins une membrane (10) qui comprend un moyen de perçage (11).

5. Dispositif selon la revendication 1, **caractérisé en ce que** la barrière (7) étanche à la pression est formée par un moyen d'étanchéité (15) qui présente au moins un orifice d'écoulement (14), l'orifice d'écoulement (14) étant fermé par un piston (16) jusqu'à la température de déclenchement du dispositif (1).

6. Dispositif selon l'une des revendications 2 à 5, **caractérisé en ce que** celui-ci présente plusieurs barrières étanches (7) à la pression.

7. Dispositif selon l'une des revendications précédentes, **caractérisé en ce qu'**au-dessous de la température de déclenchement du dispositif (1), au moins une première substance (5) est sous une pression plus élevée que ladite au moins deuxième substance (6).

8. Utilisation du dispositif selon l'une des revendications précédentes dans la chambre de combustion (8) d'une fusée à propergol solide.

9. Utilisation selon la revendication 8, **caractérisée en ce que** le propergol (13) se trouvant dans la chambre de combustion (8) est agencé de telle sorte que le propergol (13) s'enflamme par la réaction exothermique des au moins deux substances (5, 6) dans le dispositif (1).

10. Utilisation selon la revendication 9, **caractérisée en ce que** le dispositif (1) présente un orifice de sortie (12) qui est pourvu d'une fermeture (4) qui comprend un matériau qui fond à la température de déclenchement du dispositif (1).

11. Utilisation selon la revendication 10, **caractérisée en ce que** le propergol (13) se trouvant dans la chambre de combustion (8) peut être enflammé par des particules chaudes sortant de l'orifice de sortie (12) et/ou par un flux de gaz chaud sortant de l'orifice de sortie (12).
